# EUROPEAN PATENT APPLICATION

(11) **EP 4 239 522 A1**
(43) Date of publication of application: **06.09.2023**
(21) Application number: 22160257.6
(22) Date of filing: 04.03.2022
(51) Int. Cl.: G06N 3/04, G06N 3/08, H04L 41/00, H04W 84/18

(54) **APPARATUSES AND METHODS FOR SHARING TRAINED MACHINE LEARNING MODELS**

(71) Applicant: Nokia Technologies Oy, 02610 Espoo (FI)
(72) Inventor: MWANJE, Stephen, 84405 Dorfen (DE); PRAVINCHANDRA BHATT, Rakshesh, 560036 Bangalore (IN); SWAMINATHAN, Sivaramakrishnan, 560016 Bangalore (IN)
(74) Representative: Nokia EPO representatives

(57) **Abstract**

A server (11) comprising:
- means (111) for generating a set of candidate trained machine learning models configured to implement an analytics and/or a decision function by performing a knowledge distillation process between a teacher machine learning model and at least two student machine learning models;
- means (1121) for sending information related to the set of candidate trained machine learning models to at least one apparatus (13-n);
- means (1122) for sending to an apparatus (13-n) configuration data for a candidate trained machine learning model selected by the apparatus (13-n).

## Description

### TECHNICAL FIELD

. Various example embodiments relate generally to apparatuses, methods, and computer program products for sharing trained machine learning models.

### BACKGROUND

. In 5G and future wireless technologies, big data analytics is expected to play a key role in managing securing, and maintaining the complex and huge wireless networks.

. Intelligence is usually associated with the cloud, but 5G and future wireless technologies will require efficient connectivity for billions of things. To enable this, it will be required to scale the intelligence according to the volume of connected devices. For 5G and beyond wireless technologies, devices at the wireless edge will also need to share the intelligence. This requires on-device artificial intelligence capabilities for smartphones, cars, sensors, and other connected things, so they can perceive, reason, and act on their own.

. The challenges of sharing trained machine learning models have been evaluated in various approaches.

. The typical approach for allowing the transfer of a model trained at the cloud towards the wireless edge is federated learning where edge units train models that are then aggregated at the cloud and the aggregated model is sent back to the edge units. This may achieve benefits but still limits the kinds of models to those which can be trained at the edge. In addition, such an approach does not allow for a complex model to be trained at the cloud and then transferred to the edge.

.Another approach is transfer learning where the learning achieved at one location may be used at a different location in the network. This approach enables transferring specific insight on the states of the edge units from a central entity but does not allow the edge units to have a system view which requires much more complex training of machine learning models at the edge units and which may not be possible to do in practice due to the limited storage and computational resources of the edge units.

. There is accordingly a need for improved techniques for sharing trained machine learning model between entities operable in wireless networks in particular and in communication systems in general.

### SUMMARY

. The scope of protection is set out by the independent claims. The embodiments, examples, and features, if any, described in this specification that do not fall under the scope of the protection are to be interpreted as examples useful for understanding the various embodiments or examples that fall under the scope of protection.

. In a first aspect, there is provided a server comprising:
- means for generating a set of candidate trained machine learning models configured to implement an analytics and/or a decision function by performing a knowledge distillation process between a teacher machine learning model and at least two student machine learning models, the candidate trained machine learning models having different performance and/or complexity levels;
- means for sending information related to the set of candidate trained machine learning models to at least one apparatus, the information comprising information representative of the performance and/or complexity levels of the set of candidate trained machine learning models;
- means for sending to an apparatus configuration data for a candidate trained machine learning model selected by the apparatus.

**.** In an embodiment, the means for sending configuration data are configured to send the configuration data in response to a request received from the apparatus, the request including at least one target performance and/or complexity level related to a requested trained machine learning model.

. In an embodiment, the means for generating the set of candidate trained machine learning models are configured to generate the set of candidate trained machine learning models in response to the request.

**.** In an embodiment, the means for generating the set of candidate trained machine learning models are configured to:
- determine a pre-processing algorithm based at least on a format of training data;
- generate processed training data by applying the pre-processing algorithm to the training data;
- train the teacher and the at least two student machine learning models using the processed training data.

**.** In an embodiment, the means for generating the set of candidate trained machine learning models are configured to determine the pre-processing algorithm based on the at least one target performance and/or complexity level.

. In an embodiment, the configuration data include software instructions and/or trained model parameters.

**.** In an embodiment, the means for generating the set of candidate trained machine learning models are configured to:
- train the teacher machine learning model to generate teacher output data from input data in order to minimize a teacher prediction loss;
- train each student machine learning model to generate student output data from the input data in order to minimize a student prediction loss; the student prediction loss being computed as a weighted sum of a first prediction loss and a second prediction loss, the first prediction loss being a loss of the student machine learning model and the second prediction loss being a distillation loss computed based on the teacher output data and the student output data.

. In a second aspect, there is provided an apparatus comprising:
- means for selecting, in a set of candidate trained machine learning models configured to implement an analytics and/or a decision function and having different performance and/or complexity levels, a candidate trained machine learning model based on the performance and/or complexity levels;
- means for sending to a server a request for receiving configuration data of a trained machine learning model selected in the set of candidate trained machine learning models;
- means for generating inference data by running the selected trained machine learning model configured with the configuration data received from the server.

. In an embodiment the means for sending the request for receiving configuration data to the server are configured to send to the server a request for receiving information related to the set of candidate trained machine learning models, the request including at least one target performance and/or complexity level related to a requested trained machine learning model.

. In an embodiment, the means for selecting are configured to select the trained machine learning model from the set of candidate trained machine learning models based on the at least one target performance and/or complexity level and information received from the server, the information comprising information representative of the performance and/or complexity levels of the set of candidate trained machine learning models.

. In an embodiment, the means for generating inference data are configured to generate pre-processed input data by applying a pre-processing algorithm to input data, the configuration data of the pre-processing algorithm being received from the server, the means being configured to generate the inference data by applying the selected trained machine learning model to the pre-processed input data.

. In an embodiment, the means for generating inference data are configured to measure a performance of the selected trained machine learning model, the means for sending to a server a request for receiving configuration data being configured to send, based on the measured performance, a new request for receiving updated configuration data for the selected trained machine learning model or for receiving configuration data of another trained machine learning model selected based on an updated target performance and/or complexity level.

. In an embodiment, the apparatus is an apparatus operable at a wireless edge of a wireless communication system, the analytics and/or decision function being a network function at the wireless communication system.

. In a third aspect, there is provided a method for use at a server, the method comprising:
- generating a set of candidate trained machine learning models configured to implement an analytics and/or a decision function by performing a knowledge distillation process between a teacher machine learning model and at least two student machine learning models, the candidate trained machine learning models having different performance and/or complexity levels;
- sending information related to the set of candidate trained machine learning models to at least one apparatus, the information comprising information representative of the performance and/or complexity levels of the set of candidate trained machine learning models;
- sending to an apparatus configuration data for a candidate trained machine learning model selected by the apparatus.

. In a fourth aspect, there is provided a method for use at an apparatus, the method comprising:
- selecting, in a set of candidate trained machine learning models configured to implement an analytics and/or a decision function and having different performance and/or complexity levels, a candidate trained machine learning model based on the performance and/or complexity levels;
- sending to a server a request for receiving configuration data of a trained machine learning model selected in the set of candidate trained machine learning models;
- generating inference data by running the selected trained machine learning model configured with the configuration data received from the server.

. In a fifth aspect, there is provided a non-transitory computer-readable medium storing computer-executable instructions that, when executed by at least one processor at an apparatus, cause the apparatus to perform the method for use at the server as disclosed herein.

**.** Generally, the server comprises means for performing one or more or all steps of the method for use at the server as disclosed herein. The means include circuitry configured to perform one or more or all steps of the method. The means may include at least one processor and at least one memory including computer program code, the at least one memory and the computer program code being configured to, with the at least one processor, cause the server to perform one or more or all steps of the method for use at the server as disclosed herein.

. In a sixth aspect, there is provided a non-transitory computer-readable medium storing computer-executable instructions that, when executed by at least one processor at an apparatus, cause the apparatus to perform the method for use at an apparatus as disclosed herein.

**.** Generally, the apparatus comprises means for performing one or more or all steps of the method for use at an apparatus as disclosed herein. The means include circuitry configured to perform one or more or all steps of the method. The means may include at least one processor and at least one memory including computer program code, the at least one memory and the computer program code being configured to, with the at least one processor, cause the apparatus to perform one or more or all steps of the method for use at an apparatus as disclosed herein.

. In a seventh aspect, there is provided an apparatus comprising
at least one processor, and
at least one memory including computer program code;
the at least one memory and the computer program code configured to, with the at least one processor, cause the apparatus at least to perform:
   - generating a set of candidate trained machine learning models configured to implement an analytics and/or a decision function by performing a knowledge distillation process between a teacher machine learning model and at least two student machine learning models, the candidate trained machine learning models having different performance and/or complexity levels;
   - sending information related to the set of candidate trained machine learning models to at least one apparatus, the information comprising information representative of the performance and/or complexity levels of the set of candidate trained machine learning models;
   - sending to an apparatus configuration data for a candidate trained machine learning model selected by the apparatus.

. In an embodiment, the at least one memory and the computer program code are configured to, with the at least one processor, cause the apparatus to send the configuration data in response to a request received from the apparatus, the request including at least one target performance and/or complexity level related to a requested trained machine learning model.

. In an embodiment, the at least one memory and the computer program code are configured to, with the at least one processor, cause the apparatus to generate the set of candidate trained machine learning models in response to the request.

. In an embodiment, the at least one memory and the computer program code are configured to, with the at least one processor, cause the apparatus to:
- determine a pre-processing algorithm based at least on a format of training data;
- generate processed training data by applying the pre-processing algorithm to the training data;
- train the teacher and the at least two student machine learning models using the processed training data.

. In an embodiment, the at least one memory and the computer program code are configured to, with the at least one processor, cause the apparatus to determine the pre-processing algorithm based on the at least one target performance and/or complexity level.

. In an embodiment, the at least one memory and the computer program code are configured to, with the at least one processor, cause the apparatus to:
- train the teacher machine learning model to generate teacher output data from input data in order to minimize a teacher prediction loss;
- train each student machine learning model to generate student output data from the input data in order to minimize a student prediction loss; the student prediction loss being computed as a weighted sum of a first prediction loss and a second prediction loss, the first prediction loss being a loss of the student machine learning model and the second prediction loss being a distillation loss computed based on the teacher output data and the student output data.

. In an eighth aspect, there is provided apparatus comprising
at least one processor, and
at least one memory including computer program code;
the at least one memory and the computer program code configured to, with the at least one processor, cause the apparatus at least to perform:
   - selecting, in a set of candidate trained machine learning models configured to implement an analytics and/or a decision function and having different performance and/or complexity levels, a candidate trained machine learning model based on the performance and/or complexity levels;
   - sending to a server a request for receiving configuration data of a trained machine learning model selected in the set of candidate trained machine learning models;
   - generating inference data by running the selected trained machine learning model configured with the configuration data received from the server.

. In an embodiment, the at least one memory and the computer program code are configured to, with the at least one processor, cause the apparatus to send to the server a request for receiving information related to the set of candidate trained machine learning models, the request including at least one target performance and/or complexity level related to a requested trained machine learning model.

. In an embodiment, the at least one memory and the computer program code are configured to, with the at least one processor, cause the apparatus to select the trained machine learning model from the set of candidate trained machine learning models based on the at least one target performance and/or complexity level and information received from the server, the information comprising information representative of the performance and/or complexity levels of the set of candidate trained machine learning models.

. In an embodiment, the at least one memory and the computer program code are configured to, with the at least one processor, cause the apparatus to generate pre-processed input data by applying a pre-processing algorithm to input data, the configuration data of the pre-processing algorithm being received from the server, the at least one memory and the computer program code being configured to, with the at least one processor, cause the apparatus to generate the inference data by applying the selected trained machine learning model to the pre-processed input data.

. In an embodiment, the at least one memory and the computer program code are configured to, with the at least one processor, cause the apparatus to measure a performance of the selected trained machine learning model, the at least one memory and the computer program code being configured to, with the at least one processor, cause the apparatus to send, based on the measured performance, a new request for receiving updated configuration data for the selected trained machine learning model or for receiving configuration data of another trained machine learning model selected based on an updated target performance and/or complexity level.

### BRIEG DESCRIPTION OF THE DRAWINGS

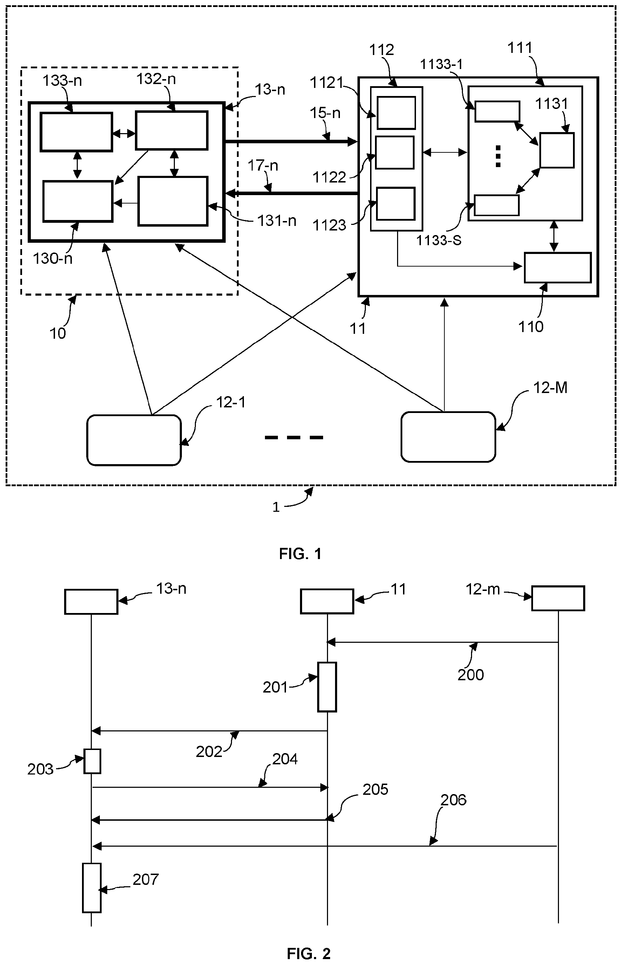

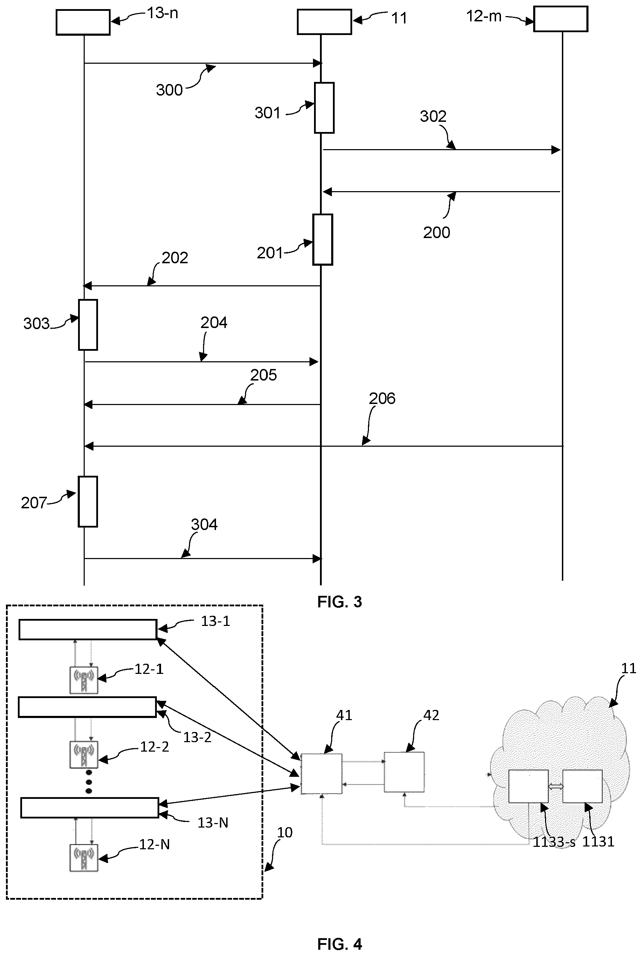

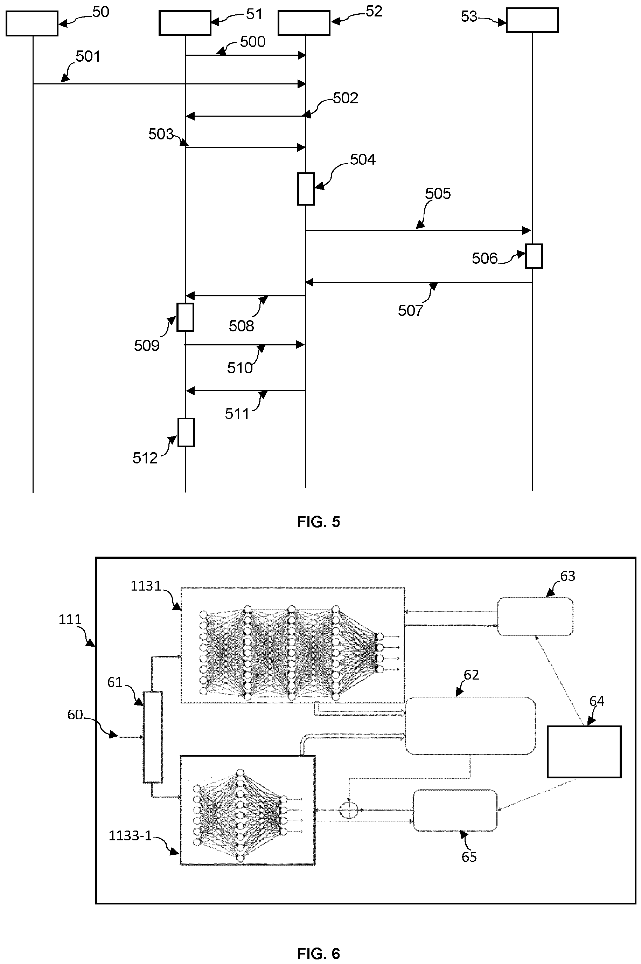

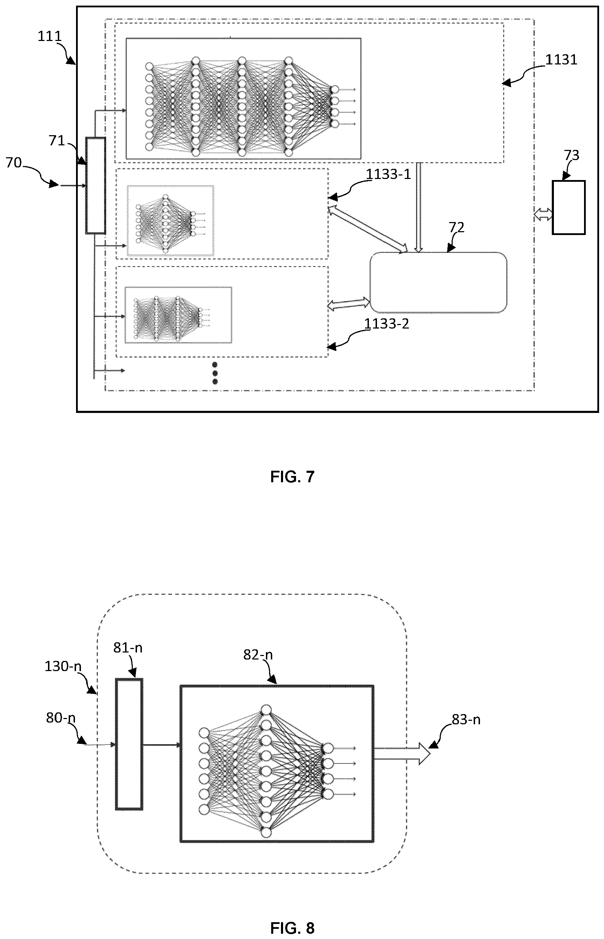

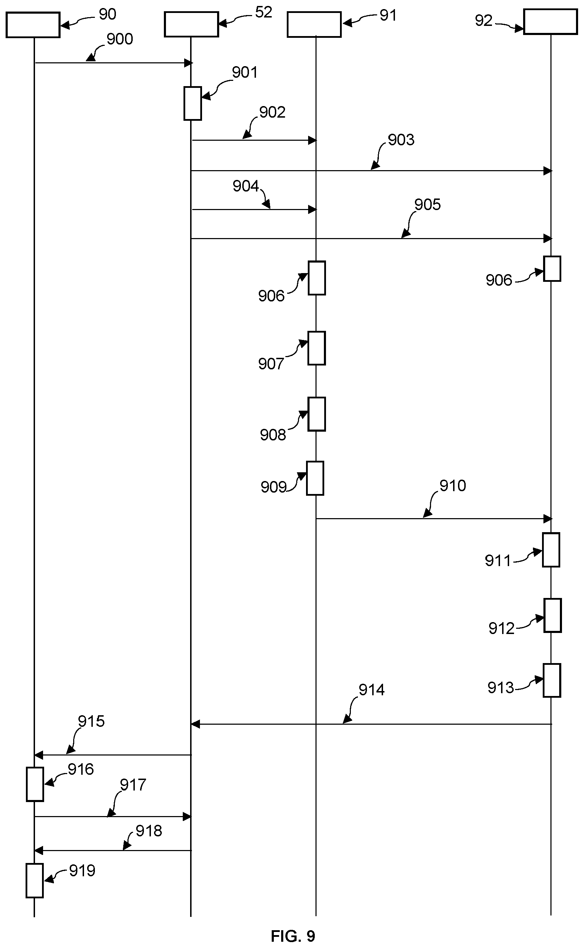

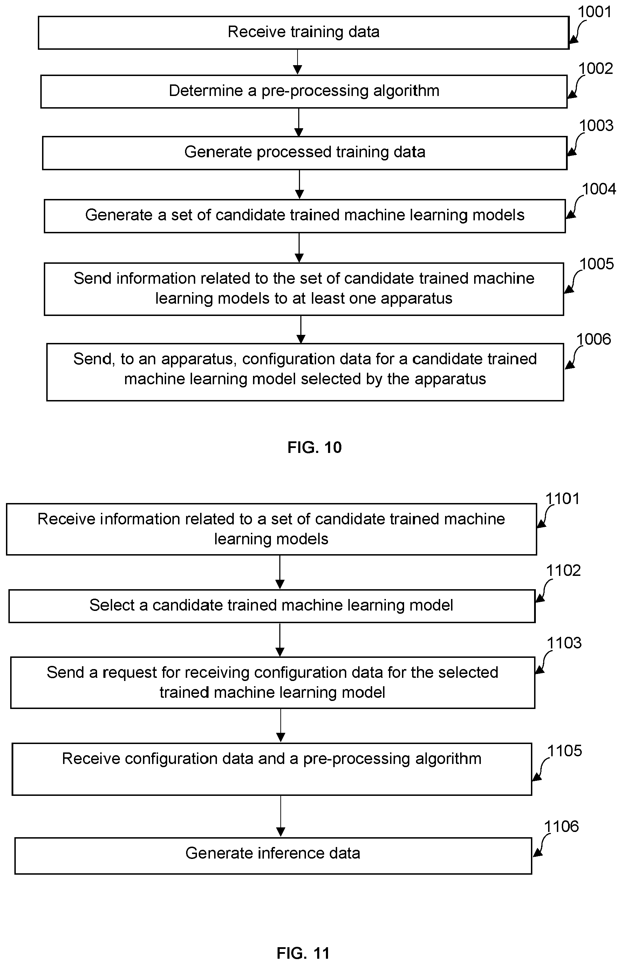

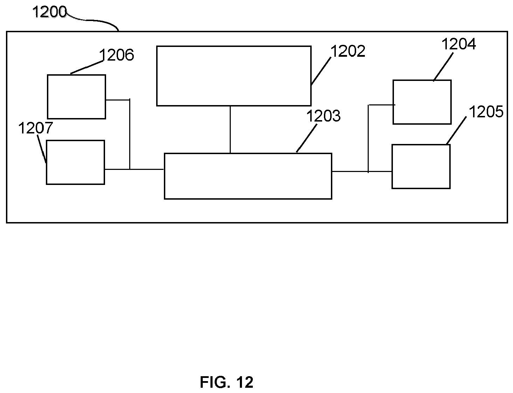

**.** The accompanying drawings, which are incorporated in and constitute a part of this specification, illustrate example embodiments together with the general description given above, and the detailed description given below.
**.** FIG. 1 is a schematic diagram illustrating an exemplary system in which exemplary embodiments may be implemented.
**.** FIG. 2 is a connection flow diagram illustrating an exemplary implementation of the sharing of a trained machine learning model, according to some embodiments.
**.** FIG. 3 is a connection flow diagram illustrating an exemplary implementation of the sharing of a trained machine learning model, according to some embodiments.
**.** FIG. 4 is a schematic block diagram illustrating an exemplary implementation of the sharing of trained machine learning models in a wireless communication system, according to some embodiments.
**.** FIG. 5 is a connection flow diagram illustrating an exemplary implementation of the sharing of a trained machine learning model, according to some embodiments.
**.** FIG. 6 is a schematic diagram illustrating an exemplary implementation of a processing unit of a server, according to some embodiments based on artificial neural networks.
**.** FIG. 7 is a schematic diagram illustrating an exemplary implementation of a processing unit of a server, according to some embodiments based on artificial neural networks.
**.** FIG. 8 is a schematic diagram illustrating an exemplary implementation of a processing unit of an apparatus, according to some embodiments.
**.** FIG. 9 is a connection flow diagram illustrating an exemplary implementation of the sharing of trained machine learning models, according to some embodiments based on artificial neural networks.
**.** FIG. 10 is a flowchart illustrating a method for use at a server, according to some embodiments.
**.** FIG. 11 is a flowchart illustrating a method for use at an apparatus, according to some embodiments.
**.** FIG. 12 is an exemplary hardware structure of an apparatus, according to some embodiments.

**.** It should be noted that these drawings are intended to illustrate the general characteristics of devices, methods, and structures utilized in certain example embodiments and to supplement the written description provided below. These drawings are not, however, to scale and may not precisely reflect the precise structural or performance characteristics of any given embodiment and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

**.** Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

**.** Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures, and techniques may be shown without unnecessary detail in order to avoid obscuring example embodiments.

**.** Exemplary embodiments provide apparatuses, methods, and computer program products for sharing trained machine learning models in communication systems.

. Sharing trained machine learning models according to this specification enables sharing machine learning models after a learning or training performed at a first entity (referred to as a 'server') with at least one second entity (referred to as an 'apparatus') operable in a communication system. The server performs the training of a plurality of machine learning models including a teacher machine learning model and at least two student machine learning models for a specific use-case in the communication system. The server may perform the training after receipt of a request for a trained machine learning model from a requesting apparatus and/or in advance, i.e. without waiting for a request for a trained machine learning model.

. The teacher and the at least two student machine learning models are configured to implement a same function, the function being for example a given analytics function and/or decision function. The at least two student machine learning models are trained in such a way that they differ in their requirements in term of processing resources (e.g. the computational and/or storage resources required at the target apparatus) such that they have distinct performance and / or complexity levels. The at least two student machine learning models may differ in at least one model parameter having an impact on the performance and/or complexity of the machine learning model such as: the model size, the model architecture (e.g. the number of layers and/or neurons and/or hyperparameters for artificial neural networks).

. According to some embodiments, the performance of a machine learning model is measured using a performance metric. Exemplary performance metrics comprise, without limitation, accuracy metrics measuring the accuracy of the model (e.g. classification accuracy, confusion matrices, area under curve, and F1 score), loss errors (e.g. mean absolute errors and mean squared errors).

. According to some embodiments, the complexity of a machine learning model is measured in terms of the computational and/or storage resources required to implement and/or run the model.

. The server manages and performs the sharing of the trained machine learning models with the at least one apparatus based on an interaction between the server and the at least one apparatus. The interaction enables the apparatus to specify its requirements/specifications in terms of one or more target performance and/or complexity levels of the requested trained machine learning model for the specific use-case. The interaction enables the server to provide to the apparatus the appropriate requested trained machine learning model that meets the requirements of the apparatus such that the sharing of the trained machine learning models is performed in a scalable manner to meet the requirements of each concerned requesting apparatus. The requirements of a requesting apparatus may be based on computational and/or storage resources available at the apparatus. The apparatus is configured to implement the requested trained machine learning model to generate inference data from input data.

. The server plays the role of a centralized training center. The server receives training data and generates a set of candidate trained machine learning models by performing a knowledge distillation process between the teacher machine learning model and the at least two student machine learning models. The set of candidate trained machine learning models comprises at least some of the at least two student machine learning models resulting from the knowledge distillation process.

. Knowledge distillation enables training the teacher and the student machine learning models concurrently and provides a trained teacher and two or more trained student machine learning models. In other words, knowledge distillation provides trained model parameters for the teacher and the at least two student machine learning models.

. A (teacher, student or candidate) machine learning model according to this specification may be any type of machine learning model, either supervised or unsupervised.

. The teacher and the at least two student machine learning models and the candidate trained machine learning models have the same model type but differ in their performance and / or complexity levels. The student machine learning models may be compressed in size but configured to achieve performance results that are close to the performance results obtained by the teacher machine learning model.

. Exemplary supervised machine learning models comprise without limitation support-vector machines (SVM), linear regression models, logistic regression models, Naive Bayes models, linear discriminant analysis, decision trees, K-nearest neighbor algorithms, supervised artificial neural networks, and similarity learning models.

. Exemplary artificial neural networks comprise without limitation autoencoders, recurrent neural networks and convolutional neural networks.

. Exemplary unsupervised machine learning models comprise without limitation clustering models (e.g., hierarchical clustering, k-means, mixture models) and unsupervised artificial neural networks (e.g., deep belief networks, generative adversarial networks).

. According to some embodiments in which the teacher and the student machine learning models are neural networks involving a plurality of layers, the trained model parameters of the teacher and the student machine learning models may comprise one or more parameters including: the number of the model layers, weighting coefficients associated with the connections between the different layers, bias vectors, parameters of a loss function, etc.

. According to some embodiments in which the teacher and student machine learning models are support vector machine algorithms, the trained model parameters comprise at least support vectors.

**.** The candidate trained machine learning models are configured to implement a given analytics and/or decision function, that may be used in the context of a use-case in a wide variety of applications and in different systems and various industries.

. Exemplary applications comprise without limitation:
- voice recognition;
- image processing/computer vision;
- natural language processing;
- information retrieval;
- personalization and recommendation;
- robotics, and
- data analytics including predictive and prescriptive analytics.

. Exemplary systems comprise without limitation:
- monitoring systems;
- navigation systems;
- surveillance systems;
- transportation systems;
- telecommunication systems.

. Exemplary industries comprise without limitation:
- the health sector;
- industrial Internet of Things or loT;
- low enforcement;
- traffic monitoring.

. In exemplary applications in telecommunication systems, the apparatus may be any end device or network entity implementing a selected trained machine learning model for various data-based use-cases for the design and/or planning and/or optimization of the telecommunication systems.

. Exemplary use-cases comprise without limitation:
- use-cases related to the physical-layer of communication networks such as modulation, coding, decoding, signal detection, channel estimation, prediction, compression, interference mitigation;
- use-cases related to the medium access control layer of communication networks such as multiple access and resource allocation (e.g., power control, scheduling, spectrum management);
- channel modeling;
- network optimization;
- cell capacity estimation in cellular networks;
- routing;
- resource management;
- data traffic management;
- security and anomaly detection;
- root cause analysis;
- transport protocol design and optimization;
- user/network/application behavior analysis/prediction;
- transport-layer congestion control;
- user experience modeling and optimization;
- user mobility and positioning management;
- network slicing, network virtualization and software defined networking;
- non-linear impairments compensation in optical networks (e.g., visible-light communications, fiber-optics communications, and fiber-wireless converged networks), and
- quality-of-transmission estimation and optical performance monitoring in optical networks.

. Exemplary analytics and/or decision function comprise without limitation: coverage analysis, coverage problems analysis, handover problems analysis, faults detection, interference detection, coverage optimization, capacity optimization, handover optimization, interference reduction, Energy saving optimization,

. Exemplary end devices comprise without limitation laptops, mobile phones, robots, drones, wearable devices, autonomous systems (e.g., autonomous vehicles in intelligent transport systems), loT devices (e.g., connected vehicles, intelligent cameras, machines, and home alliances).

. Exemplary network entities comprise without limitation:
- radio access network entities such as base stations (e.g., cellular base stations like eNodeB in LTE and LTE-advanced networks and gNodeB used in 5G networks, and femtocells used at homes or at business centers);
- relay stations;
- control stations (e.g., radio network controllers, base station controllers, network switching sub-systems);
- access points in local area networks or ad-hoc networks;
- gateways and radio access network entities;
- network management entities (e.g., Operation, Administration and Management (OAM) entity)
- network automation systems;
- distributed analytics entities such as self-autonomous systems (D-SONs);
- network functions (e.g., network data analytics function or NWDAF defined in current 3GPP standards).

. In some embodiments, the server is or is a part of a centralized analytics entity at the cloud such as a Centralized-Self Organizing Network (C-SON), an MDAF or an NWDAF, etc.

**.** FIG. 1 is a schematic diagram illustrating an exemplary system 1 in which exemplary embodiments may be implemented.

**.** The system 1 may be a digital system part of a communication system, a data processing system, or a data storage system. Exemplary digital systems comprise, without limitations:
- radio communication systems, wireless communication systems, optical fiber-based communication systems, optical wireless communication systems, and satellite communication systems, and
- storage systems (e.g., cloud computing systems).

. In application to wireless networks, the system 1 may be any wireless network involving any type of wireless propagation medium suitable for this type of connectivity.

**.** Exemplary wireless communication networks comprise, without limitation, ad-hoc wireless networks used in local area communications, wireless sensor networks, and radio communication networks (e.g., Long Term Evolution or LTE, LTE-advanced, 3G/4G/5G and beyond).

**.** Exemplary applications to wireless networks comprise:
- Machine-To-Machine (M2M) ;
- Device-To-Device (D2D);
- Industry 4.0;
- loT (for example vehicle-to-everything communications) involving networks of physical devices, machines, vehicles, home alliances and many other objects connected to each other and provided with a connectivity to the Internet and the ability to collect and exchange data without requiring human-to-human or human-to-computer interactions.

. In exemplary loT applications, the system 1 may be a wireless loT network representing low energy power-consumption/long battery life/low-latency/low hardware and operating cost/high connection density constraints such as low-power wide area networks and low-power short-range loT networks. The communication system 1 may be any wireless network enabling loT in licensed or license-free spectrum.

**.** Exemplary applications of M2M and loT applications comprise, without limitation:
- consumer applications (e.g., Internet of Vehicles, home automation, smart cities, wearable technologies, and connected health), and
- commercial applications (e.g., digitalized healthcare connecting medical resources and healthcare services in which special monitors and sensors may be used to enable remote health monitoring and emergency notifications, smart traffic control, and road assistance).

. In another application to optical fiber networks, the system 1 may be any data network in which any optical fiber link is designed to carry data over short or long distances. Exemplary applications using optical fiber links over short distances comprise high-capacity networks such as data center interconnections. Exemplary applications using optical fiber links over long distances comprise terrestrial and transoceanic transmissions. In such applications, network data generated by the network elements operable in the system 1 may be carried by optical signals polarized according to the different polarization states of the optical fiber. The optical signals propagate along the fiber-based link according to one or more propagation modes.

. Exemplary applications of optical fiber data networks comprise, without limitation, aerospace and avionics, data storage (e.g., in cloud computing systems, automotive, industry, and transportation). Such applications may involve transfer of voice (e.g., in telephony), data (e.g., data supply to homes and offices known as fiber to the home), images or video (e.g., transfer of internet traffic), or connection of networks (e.g., connection of switches or routers and data center connectivity in high-speed local area networks).

. The system 1 comprises a server 11 and at least one apparatus 13-n with n=1,...,N and N designating a total number of the apparatuses that benefit from the sharing of the machine learning models that are trained at the server 11. For simplification reasons, FIG. 1 depicts one apparatus 13-n. However, the skilled person in the art will readily understand that the various embodiments apply to any system 1 involving two or more apparatuses 13-n, n=1,..., N with N higher than or equal to two.

. In the system 1, the server 11 communicates:
- with the apparatus 13-n via the links 15-n and 17-n for the operations related to the sharing of one or more trained machine learning models, and
- with at least one data source 12-m with m=1,... ,M for the operations related to collecting data for training the teacher and student machine learning models, with M designating a total number of data sources in the system 1.

. The apparatus 13-n communicates with the at least one data source 12-m for operations related to collecting data for inference data generation purposes.

. The interactions involving the server 11 and the apparatus 13-n, with n=1,...,N, may use a request or subscription model and service-based interfaces. More specifically, the apparatus 13-n may be configured to communicate with the server 11 via the link/interface 15-n to send requests related to the reception of one or more trained machine learning models from the server 11 based on one or more target performance and/or complexity levels supported by the apparatus 13-n. The server 11 may use the link/interface 17-n to share with the apparatus 13-n information related to the trained machine learning models that are available at the server 11 and to transfer the required configuration data enabling the apparatus 13-n to configure a trained machine learning model selected by the apparatus 13-n among the trained models that are available at the server 11.

. The data source 12-m, with m=1,...,M, generates input data for training the teacher and student machine learning models at the server 11 and/or for generating inference data at the apparatus 13-n.

. In application to communication systems, exemplary input data generated by a data source 12-m may comprise, without limitation:
- measurements data;
- alarm data;
- configuration data (e.g. data identifying the hardware and/or software configuration of an entity operable in a communication network), and
- network description data (e.g., network topology data, network configuration data, network activity data).

. Exemplary measurements data comprise, without limitation:
- network measurements data such as channel state measurements and quality of service measurements;
- fault measurements data;
- performance measurements data or Key Performance Indicators (KPIs) such as downlink and/or uplink throughput, signal-to-noise ratio, bit rates, and round trip time;
- platform computing measurements data;
- security-related measurements data, and
- communication measurements data such as traffic measurements data and network capacity measurements data.

. Data used as input data for training the teacher and student machine learning models is designated as training data. For example, when the teacher and student machine learning models implement a segmentation algorithm applied to images, the training data may include input images to be segmented and associated labels for implementing a supervised training.

. Data used as input data for generating inference data is designated as operational input data (also referred to as 'input data'). The inference data are output data of a trained machine learning model implemented at the apparatus 13-n and configured with the trained model parameters generated by the server 11 through the knowledge-distillation process. For example, when the trained machine learning model implements a segmentation algorithm applied to images, the inference data may include segmented image(s) and/or associated label(s) and/or segmentation mask(s).

. In some embodiments in application to wireless communication systems, the apparatus 13-n is an edge apparatus operable at the wireless edge 10 in the system 1.

**.** Referring to FIG. 1, the server 11 comprises a storage unit 110, a processing unit 111, and a transmission/reception unit 112.

**.** The processing unit 111 is configured to perform processing operations for generating candidate trained machine learning models configured to implement an analytics function and/or a decision function for a specific use-case. The processing unit 111 comprises a unit 1131 implementing a teacher machine learning model and two or more units 1133-s with s=1,... ,S, each unit 1133-s implementing a student machine learning model, with S designating a total number of the student machine learning models. The processing unit 111 is configured to generate a set of candidate trained machine learning models by performing a knowledge distillation process between the teacher machine learning model and at least two student machine learning models. The unit 1131 communicates with at least two units 1133-s for the operations related to the knowledge distillation process.

**.** The storage unit 110 is configured to store training data collected from the at least one data source 12-m and/or data resulting from the knowledge distillation process (e.g. the trained model parameters) and/or processed data generated by the processing unit 111. The storage unit 110 communicates with the processing unit 111 for the operations related to the retrieval of training data and/or the storage of the processed data.

**.** The transmission/reception unit 112 is configured to perform transmission operations from the server 11 to the apparatus 13-n and reception operations to capture data sent by the at least one data source 12-m and capture signals/data/messages sent by the apparatus 13-n. More specifically, the transmission/reception unit 112 comprises a first transmission unit 1121 configured to send to the apparatus 13-n information related to the set of candidate trained machine learning models and a second transmission unit 1122 configured to send configuration data for a candidate trained machine learning model selected by the apparatus 13-n (for example over the link 17-n). From a reception point of view, the transmission/reception unit 112 comprises a reception unit 1123 configured to capture/detect the training data sent by the at least one data source 12-m and requests sent by the apparatus 13-n (for example over the link 15-n). The transmission/reception unit 112 communicates with the storage unit 110 for the operations related to the storage of the received training data and communicates with the processing unit 111 for the operations related to the transfer of information related to the set of candidate trained machine learning model from the server 11 to the apparatus 13-n and the transfer of the requests received from the apparatus 13-n to the server 11.

**.** Still referring to FIG. 1, the apparatus 13-n comprises a transmission/reception unit 132-n, a storage unit 133-n, a processing unit 130-n and a selection unit 131-n.

**.** The storage unit 133-n is configured to store input data received from the at least one data source 12-m and/or processed data generated by the processing unit 130-n. The storage unit 133-n communicates with the transmission/reception unit 132-n for the operations related to the storage of the input data received from the at least one data source 12-m and communicates with the processing unit 130-n for the operations related to the retrieval of the input data from the storage unit 133-n and the storage of processed data (e.g. inference data) in the storage unit 133-n.

. The transmission/reception unit 132-n is configured to send requests to the server 11 for receiving information related to the trained machine learning models that are available at the server 11 and for receiving configuration data of a trained machine learning model selected by the selection unit 131-n in the set of the candidate trained machine learning models that are available at the server 11. The transmission/reception unit 132-n communicates with the storage unit 133-n for the operations related to the storage of the received input data from the data sources 12-m and communicates with the selection unit 131-n to exchange information related to the selected trained machine learning model and the received information related to the set of candidate trained machine learning models that are available at the server 11.

. The processing unit 130-n is configured to generate inference data by running the trained machine learning model selected by the selection unit 131-n and configured with configuration data received from the server 11. The processing unit 130-n communicates with the selection unit 131-n to receive from the selection unit 130-n the selected trained machine learning model, communicates with the transmission/reception unit 132-n to receive the configuration data of the selected trained machine learning model, and communicates with the storage unit 133-n for the operations related to the retrieval of the input data for generating inference data.

. FIG. 2 is a connection flow diagram illustrating an exemplary implementation of the sharing of a trained machine learning model, according to some embodiments.

. In FIG. 2, only one apparatus 13-n and one data source 12-m are illustrated for simplification reasons. However, the skilled person in the art will readily understand that the various embodiments apply to the systems involving two or more apparatuses 13-n with n=1,...,N and N higher than or equal to two and two or more data sources 12-m with m=1,...,M and M higher than or equal to two. Moreover, the processing units 111 and 130-n and the transmission/reception units 112 and 132-n are not illustrated for simplification reasons. The processing operations illustrated in FIG. 2 and performed at the server side (respectively the apparatus side) are performed by the processing unit 111 (respectively the processing unit 130-n). The operations related to the selection of a candidate trained machine learning model at the apparatus 13-n are performed by the selection unit 131-n.

. The various embodiments enable the apparatus 13-n to request and receive from the server 11 information related to the candidate trained machine learning models that are available at the server 11 and to select an appropriate trained machine learning model that meets implementation performance/complexity requirements specified by the apparatus 13-n. The various embodiments also enable the apparatus 13-n to receive from the server 11 the configuration data of the selected trained machine learning model using which the apparatus 13-n can configure the selected trained machine learning model and run the configured selected trained machine learning model for generating inference data.

**.** FIG. 2 illustrates an embodiment in which the server 11 generates a set of candidate trained machine learning models periodically and provides periodically information related to the available trained machine learning models to the apparatus 13-n to inform it about the available trained machine learning models.

**.** For generating the set of candidate trained machine learning models, the server 11 starts by collecting training data from the data source 12-m. At step 200, the server 11 receives training data from the data source 12-m.ln some embodiments, the server 11 requests the training data to the data source 12-m.ln some embodiments, the server 11 receives the training data in specific time intervals (for example periodically).

**.** At step 201, the server 11 generates a set of candidate trained machine learning models configured to implement an analytics and/or a decision function for a specific use-case by performing a knowledge distillation process between a teacher machine learning model and at least two student machine learning models. The set of candidate trained machine learning models comprises trained student machine learning models having different performance and/or complexity levels.

**.** Knowledge distillation relies on a tandem training of the teacher and student machine learning models. The received training data needs thus to be transformed to a form of data that allows a combined training of the teacher and student machine learning models. Thus, before starting the knowledge distillation process, the server 11 may be configured to determine, at step 201, a pre-processing algorithm and to generate processed training data by applying the pre-processing algorithm to the training data. The server 11 performs then the training of the teacher and the at least two student machine learning models using the processed training data.

**.** In some embodiments, the server 11 is configured to determine the pre-processing algorithm based at least on the format of the training data.

**.** In some embodiments, the pre-processing algorithm is an algorithm adapted to clean-up and/or structure the training data in the appropriate data format according to the specific use-case. Exemplary formats comprise tabular formats, image formats, and text formats.

**.** The teacher and student machine learning models are fed with the processed training data during the knowledge distillation process. Knowledge from the teacher machine learning model is distilled to the at least two student machine learning models to enable the student machine learning models to perform as close as the teacher machine learning model. The knowledge distillation process pushes the student machine learning models to behave like the teacher machine learning model.

**.** In a first embodiment, knowledge distillation is based on online distillation according to which the teacher and student machine learning models are trained simultaneously end-to-end.

**.** In a second embodiment, knowledge distillation is based on offline distillation according to which the teacher machine learning model is first trained and then used to train the at least two student machine learning models.

**.** In a third embodiment in which the teacher and student machine learning models are artificial neural networks, knowledge distillation is based on self-distillation according to which deeper layers of a network (teacher or student) are used for training shallow parts of the same network.

**.** Generally, the server 11 trains the teacher machine learning model to generate output data (referred to as 'teacher output data') from input data in order to minimize a prediction loss (referred to as a 'teacher prediction loss') and trains each of the at least two student machine learning models to generate output data (referred to as 'student output data') from input data in order to minimize a prediction loss (referred to as a 'student prediction loss').

**.** The teacher prediction loss is computed as the loss between the predictions generated by the teacher machine learning model, i.e. the teacher output data, and reference data (also referred to as a 'ground truth').

**.** The student prediction loss is computed as a weighted sum of a first prediction loss and a second prediction loss. The first prediction loss is a loss of the student machine learning model and is computed as the loss between the predictions generated by the student machine learning model, i.e. the student output data, and the reference data. The second prediction loss is a distillation loss, i.e. a loss between the predictions generated by the student machine learning model and the predictions generated by the teacher machine learning model. The prediction loss is accordingly computed based on the teacher output data and the student output data.

**.** The server 11 generates the set of candidate trained machine learning models from the trained student machine learning models for example by selecting among the trained student machine learning models one or more student models such that the set of candidate trained machine learning models have different performance and/or complexity levels.

**.** At step 202, the server 11 sends to the apparatus 13-n information related to the set of candidate trained machine learning models to inform the apparatus 13-n about the trained machine learning models that are available at the server 11. The information comprises information representative of the performance and/or complexity levels of the set of trained machine learning models. The information representative of the performance and/or complexity levels may be an explicit or implicit information.

. For example, the information may include for each candidate trained machine learning model a model identification (e.g. a model identifier or name) such that the information include a list of identifications of the available trained machine learning models, the list being ordered for example in an increasing order of the complexity levels of the candidate trained machine learning models or an increasing order of the performance levels of the candidate trained machine learning models such that the list of identifications provides an implicit information on the performance and/or complexity levels of the available trained machine learning models.

. For example, the information representative of the performance and/or complexity levels may include a value of a metric encoding a performance and/or complexity level for each available trained machine learning models. The performance and/or complexity levels may be encoded using a discrete or continuous scale of performance and/or complexity.

. The server 11 may be configured to generate the set of candidate trained machine learning models by regularly training the teacher and student machine learning models using the latest training data that is available in the communication system 1 and to send the information to the apparatus 13-n periodically. When re-trained, the trained parameters of the teacher and student machine learning models obtained in a previous training process are retained as initialization for the re-training process, thereby enabling a reduction of the re-training time and an enhancement of the teacher and student machine learning models with the latest trends in the training data. This also ensures that previous learning is passed on to the subsequent updated models. The server 11 may be configured to determine a re-training periodicity.

. When the apparatus 13-n receives the information from the server 11, it determines at step 203 if a machine learning model is required, for example depending on its operational conditions and/or on the performance obtained by the machine learning model already implemented and running in the apparatus 13-n for example. The apparatus 13-n checks the information received from the server 11 related to the trained machine learning models that are available at the server 11 and that can be transferred from the server 11 to the apparatus 13-n. The apparatus 13-n selects, in the set of candidate trained machine learning models, a candidate trained machine learning model, based on the information. More specifically, the apparatus 13-n selects the candidate trained machine learning model based on the performance and/or complexity levels of the different candidate trained machine learning models in the set of candidate trained machine learning models.

**.** At step 204, the apparatus 13-n sends a request to the server 11 for receiving configuration data for the selected candidate trained machine learning model in a way that enables the apparatus 13-n to update the machine learning model implemented in the apparatus 13-n and configure it with the trained model parameters generated by the training performed by the server 11.

. At step 205, the server sends to the apparatus 13-n the configuration data for the candidate trained machine learning model that has been selected by the apparatus 13-n.

. According to some embodiments, the configuration data include software instructions and/or the trained model parameters of the candidate trained machine learning model selected by the apparatus 13-n.

. The apparatus 13-n implements the selected candidate trained machine learning model configured with the received configuration data for generating inference data from input data. Thus, at step 206, the apparatus 13-n receives input data from the data source 12-m and runs at step 207 the selected candidate trained machine learning model for generating the inference data from the input data.

. According to some embodiments, the server 11 sends to the apparatus 13-n, in addition to the configuration data of the selected trained machine learning model, configuration data of the pre-processing algorithm that has been used by the server 11 to process the training data prior to their use for training the teacher and student machine learning models. This enables duplicating the type of data formatting applied by the server 11 to the training data at the side of the apparatus 13-n. The apparatus 13-n applies the pre-processing algorithm to structure the input data before their use for generating inference data. Accordingly, the apparatus 13-n is configured at step 207 to generate pre-processed input data by applying the received pre-processing algorithm to the input data received from the data source 12-m and to generate the inference data by applying the selected trained machine learning model to the pre-processed input data.

. FIG. 3 is a connection flow diagram illustrating an exemplary implementation of the sharing of a trained machine learning model, according to some embodiments.

. Similarly to FIG. 2, in FIG. 3, only one apparatus 13-n and one data source 12-m are illustrated for simplification reasons. Further, the processing units 111 and 130-n and the transmission/reception units 112 and 132-n are not illustrated for simplification reasons.

. FIG. 3 illustrates an embodiment in which the server 11 generates a set of candidate trained machine models and sends configuration data of a selected trained model to the apparatus 13-n in response to a request received from the apparatus 13-n for receiving information related with the trained machine learning models that are available at the server 11.

**.** Accordingly, at step 300, the apparatus 13-n sends to the server 11 a request for receiving information related to a set of candidate trained machine learning models that are or can be available at the server 11. For example, the request may include one or more target performance and/or complexity levels related to a requested trained machine learning model. This means that the apparatus 13-n specifies to the server 11 which are the requirements in terms of the performance and/or complexity levels for the trained machine learning model needed by the apparatus 13-n.

**.** The server 11 determines at step 301 if one or more trained machine learning models that meet the requirements of the apparatus 13-n are available (for example from a previous training process) at the server 11.

**.** The server 11 sends, at step 302, a request for training data to the data source 12-m and receives, at step 200 training data from the data source 12-m.

**.** At step 201, the server 11 generates a set of candidate trained machine learning models according to any feature detailed previously with reference to FIG. 2.

**.** According to some embodiment, the server 11 is configured to determine the pre-processing algorithm based on the one or more target performance and/or complexity levels comprised in the request received from the apparatus 13-n.

**.** At step 202, the server 11 sends to the apparatus 13-n information related to the set of candidate trained machine learning models according to any feature detailed previously with reference to FIG. 2. The information comprises information representative of the performance and/or complexity levels of the set of candidate trained machine learning models.

**.** At step 303, the apparatus 13-n selects a trained machine learning model from the set of candidate trained machine learning models based on the one or more target performance and/or complexity levels and the information received at step 202 from the server 202.

**.** Steps 204 to 207 in FIG. 3 are similar to steps 204 to 207 described in reference to FIG. 2.

**.** According to some embodiments, the apparatus 13-n is further configured at step 207 to measure the performance of the selected trained machine learning model implemented to generate inference data at step 207. If the apparatus 13-n determines that the measured performance is not sufficient (e.g. below the target performance level), the apparatus 13-n is configured to send, at step 304, a new request to the server 11 for receiving updated configuration data for the selected trained machine learning model or for receiving configuration data of another trained machine learning model based on an updated target performance and/or complexity level. In response to receiving the new request from the apparatus 13-n, the server 11 may start a new training process to generate new candidate trained machine learning models taking into account the updated target performance and/or complexity level.

**.** FIG. 4 is a schematic block diagram illustrating an exemplary implementation of the sharing of trained machine learning models in a radio communication system, according to some embodiments for mobility robustness optimization (MRO) and mobility load balancing (MLB). In this exemplary implementation, the apparatuses 13-1 to 13-N are D-SON/near-real-time radio access network intelligent controllers (RIC) operable in the wireless edge 10 and the server 11 is hosted in a centralized cloud where one or more management data analytics functions may be deployed. Further, the radio communication system involves a network management system 41 and a centralized self-organizing network (C-SON) 42. This network architecture is defined in the 3GPP standards for 5G networks and known as a hybrid-SON architecture in which C-SON algorithms are executed at centralized 3GPP management systems and the D-SON algorithms run at different network functions at the edge.

**.** In the H-SON architecture, the C-SON algorithms running at the centralized cloud have access to performance measurements (KPIs and PMs) collected from all the network elements. This allows the C-SON algorithms to have a better correlation between the performance of the different network elements and can make better system-level network optimization decisions.

**.** The centralized analytics implemented in the cloud have ample computational and storage resources to train and use deep neural networks. Various functions like MDAF, NWDAF, and loT specific analytics cater to different kinds of centralized analytics requirements. These functions have a system level view and can take care of optimizations at a broader level for many entities at the wireless edge 10. The machine learning models trained at the centralized analytics are more generalized because the data used for training is received from different distributed entities. However, the intelligence developed at these centralized analytics are not used at the edge for near-real-time optimizations, i.e. the benefits of better intelligence by virtue of deep learning models cannot be translated to perform near-real-time optimizations because the centralized entities are far from the edge of the network.

**.** On the other hand, edge analytics at the edge apparatuses consume local data received by individual entities in the network. Consequently, near-real-time optimization actions are taken at the edge apparatuses based on the current trend of the received data. Edge analytics consequently lacks the system level view and optimization actions in the network may conflict between the entities at the edge because of this. In addition, due to the limited computational resources of the edge apparatuses, the edge apparatuses have to settle down with suboptimal machine learning models. This limits the effectiveness of the decisions and the excellence of the results achieved by the edge analytics. Further, the models trained at the edge entities with a limited scope of data cannot have reasonable generalization, which restricts the re-use of models across the distributed entities.

. The various embodiments enable the usage of high-performance machine learning-based decision-making models at the network edge with limited computational and storage resources by applying knowledge distillation between the complex models deployed and developed at the network cloud (the server) and the simplified models deployed at the network edge (the apparatus).

. The various embodiments allow the training of teacher and student machine learning models at data centers that are far from the wireless edge 10 and have the required computation and storage resources, and then the transfer of the trained student machine learning models to the wireless edge 10.

. The various embodiments are applicable to all kinds of intelligent decision-making and near-real-time optimizations that may require a system-level view while running at the wireless edge.

. The D-SON entities 13-1 to 13-N perform MRO and MLB operations in order to ensure most optimum time to trigger (TTT) and cell individual offsets (CISs). Each D-SON entity 13-n implements an MRO module (not illustrated in FIG. 4) to perform MRO operations and an MLB module (not illustrated in FIG. 4) to perform MLB operations.

. The MRO and MLB modules make decisions to modify TTT and CIO parameters of different cells in the radio communication system. These parameters define the time to trigger handovers and coverage area for the cells involved in the optimizations.

. The server 11 trains high performance machine learning models at the centralized cloud and transfers the trained models to the D-SON entities 13-1 to 13-N. The D-SON entities 13-1 to 13-N use the trained models to make near-real-time optimization decisions with intelligence that gives a centralized view. The D-SON entities 13-n with n=1,...,N collect data from gNB 12-m with m=1,...,N for different kinds of optimizations. For example, handover related PMs and KPIs can be used for MRO optimizations while trace and troubleshooting data may be used for predicting the system behavior and potential outages. The server 11 receives training data and adapts the data formats and the pre-processing algorithm used to structure the training data to the network optimization use-case.

. The server 11 trains a teacher and two or more student machine learning models using data from multiple cells. The teacher and student networks are fed with training data for all cells during the training process, where each data point consists of relevant data points for the target optimization, from each cell in the given scope.

. The D-SON entities 13-n implement each a trained machine learning model provided by the server 11 to perform predictive MLB and predictive MRO operations. With knowledge distillation-based training at the server 11, multiple KPIs from multiple cells related to MLB and MRO can be input and non-conflicting optimization actions (TTT/CIO changes) can be the output decision from the trained models. The student machine learning models can be trained to avoid conflicts between MRO and MLB decisions and transferred to the edge to make non-conflicting and near-real-time decisions to arrive at CIO and TTT values for MRO and MLB optimizations.

. FIG. 5 is a connection flow diagram illustrating an exemplary implementation of the sharing of a trained machine learning model, according to some embodiments based on the H-SON architecture depicted in FIG. 4. More specifically, FIG. 5 depicts exchanges between a network operator 50, a D-SON entity 51, a C-SON entity 52 and an analytics server 53.

. At step 500, the D-SON entity 51 sends a request to the C-SON entity 52 for receiving information related to trained machine learning models that are available at the C-SON entity 52.

. At step 501, the network operator 50 provides to the C-SON entity 51 the scope of cells to be optimized for a desired optimization action.

. Steps 502 to 508 may be repeated for every retraining periodicity.

. Steps 502 and 503 may be repeated for every D-SON entity 51 in the scope mentioned by the network operator 50.

. For each D-SON entity 51 in the scope of cells, the C-SON entity 52 requests for training data. The C-SON entity 52 sends thus at step 502 a request to the D-SON entity 51 for receiving training data.

. At step 503, the C-SON entity 52 receives training data from the D-SON entity 51.

. At step 504, the C-SON entity 52 generates a pre-processing algorithm based on the received training data and the desired optimization specified by the D-SON entity 51 at step 500.

. At step 504, the C-SON entity 52 further generates processed training data by applying the pre-processing algorithm to the received training data.

. At step 505, the C-SON entity 52 provides the processed training data and the ground truth (reference data) to the analytics server 53.

. At step 506, the analytics server 53 generates a set of candidate trained machine learning models by training a teacher and two or more student machine learning models using the processed training data.

. At step 507, the analytics server 53 sends the set of candidate trained machine learning model to the C-SON entity 52.

. At step 508, the C-SON entity 52 sends to the D-SON entity 51 information related to the available set of candidate trained machine learning models.

. At step 509, the D-SON entity 51 selects a trained machine learning model in the set of the candidate trained machine learning model based on the received information.

**.** At step 510, the D-SON entity 51 sends a request to the C-SON entity 52 for receiving configuration data for the selected trained machine learning model.

. At step 511, the C-SON entity 52 sends to the D-SON entity 51 the requested configuration data of the selected training machine learning model and configuration data of the pre-processing algorithm that has been used by the C-SON entity 52 to structure the training data.

. At step 512, the D-SON entity 51 generates inference data by running the selected trained machine learning model configured with the received configuration data.

. The various embodiments enable using the high computational and storage resources available at the centralized cloud to train machine learning models that are then transferred to the wireless edge where computation resources are relatively less.

. The various embodiments enable improving the efficiency of the optimization decisions made at the wireless edge by taking advantage of the models that are trained at the centralized cloud having a system level view.

. The various embodiments enable the re-use of trained models at the wireless edge entities.

. FIG. 6 is a schematic diagram illustrating an exemplary implementation of the processing unit 111 of the server 11, according to some embodiments based on artificial neural networks. The processing unit 111 is configured to perform the knowledge distillation process to generate the set of candidate trained machine learning models. The processing unit 111 comprises:
- a first processing unit 61 configured to implement the pre-processing algorithm and generate processed training data from received training data 60;
- a second processing unit 1131 configured to implement a teacher neural network;
- a third processing unit 1133-1 configured to implement a student neural network;
- a fourth processing unit 63 configured to compute the teacher prediction loss from the teacher prediction data and the reference data provided by a storage unit 64;
- a fifth processing unit 65 configured to compute a first prediction loss for the student neural network from the student prediction data and the reference data, and
- a sixth processing unit 62 configured to perform knowledge distillation and compute a second prediction loss for the student neural network based on the teacher output data and the student output data.

. In the embodiments illustrated in FIG. 6 in which the teacher and student machine learning models are artificial neural networks, knowledge distillation may be performed according to various approaches.

. In an embodiment using response-based knowledge, the neural response of the last layer of the teacher neural network is directly used to train the student neural network to mimic the final prediction of the teacher neural network. For example, in case of classification, this is the cross-entropy loss between the teacher output data and the student output data. In another example of regression tasks, this is the mean square error between the teacher output data and the student output data.

**.** In an embodiment using feature-based knowledge, the neural response of any one of the layers of the teacher neural network (including the last layer) can be used for training the student neural network. Accordingly, the output of the intermediate layers (i.e. feature maps) can be used as the knowledge to supervise the training of the student neural network. For example, in regression or classification tasks, the loss between the feature maps of the teacher and student neural networks may be computed using the Kullback-Leibler (KL) method.

**.** FIG. 7 is a schematic diagram illustrating an exemplary implementation of a processing unit 111 of the server 11, according to some embodiments based on artificial neural networks. In this implementation, the processing unit 111 implements a teacher and at least two student machine learning models. The teacher, student and candidate machine learning models are artificial neural networks.

**.** The processing unit 111 is configured to perform the knowledge distillation process to generate the set of candidate trained machine learning models. The processing unit 111 comprises:
- a first processing unit 71 configured to implement the pre-processing algorithm and generate processed training data from received training data 70;
- a second processing unit 1131 configured to implement a teacher neural network and to compute the teacher prediction loss from the teacher prediction data and the reference data provided by a storage unit 73;
- two or more third processing unit 1133-1,1133-2,...1133-N, each third processing unit 1133-n implementing a student neural network such that the at least two student machine learning models differ in at least one model parameter having an impact on the performance and / or complexity level of the concerned student machine learning model(e.g. the size of the model, the number of neurons, number of layers, and the hyperparameters). Each third processing unit 1133-n is configured to compute a first prediction loss for the student neural network from the student prediction data and the reference data provided by the storage unit 73, and
- a fourth processing unit 72 configured to perform knowledge distillation and compute a second prediction loss for the student neural network based on the teacher output data and the student output data.

**.** In the embodiments illustrated in FIG. 6 and FIG. 7, the training of the teacher and student neural networks may be performed using the gradient descent back-propagation algorithm. Accordingly, in one pass, one batch of data points is fed to the teacher and the at least two student neural networks. After each batch pass, the teacher prediction loss is computed and back-propagated in the teacher neural network and for each student neural network, the first prediction loss and the second prediction loss are computed and the total loss constituting the student prediction loss is back-propagated to the student neural network. As a result of the training process, each student neural network is forced to behave like the teacher neural network. Indeed, in multiple passes, the teacher neural network tends to converge and each student neural network follows the teacher neural network and converges post the convergence of the teacher neural network. The convergence of the student neural networks may differ depending on their architectures and sizes.

**.** FIG. 8 is a schematic diagram illustrating an exemplary implementation of the processing unit 130-n of the apparatus 13-n, according to some embodiments in which the selected candidate machine learning model implemented in the apparatus 13-n is a neural network. In this implementation, the processing unit 130-n comprises:
- a first processing unit 81-n configured to implement the pre-processing algorithm received from the server 11 in order to generate processed input data from the input data 80-n, and
- a second processing unit 82-n configured to generate inference data 83-n from the processed input data by running the selected candidate neural network.

. FIG. 9 is a connection flow diagram illustrating an exemplary implementation of the sharing of trained machine learning models, according to some embodiments based on the H-SON architecture depicted in FIG. 4 and on the use of artificial neural networks according to FIG. 6 to FIG. 8.

**.** FIG. 9 depicts exchanges between a network entity 90 (e.g. a D-SON entity), a C-SON entity 52, a processing unit 91 implementing a teacher neural network and a processing unit 92 implementing a student neural network. FIG. 9 illustrates only one student neural network for simplification reasons. However, the skilled person in the art will readily understand that the embodiments described in FIG. 9 apply to train two or more student neural networks.

. At step 900, the network entity 90 sends a request to the C-SON entity 52 for receiving information related to trained machine learning models that are available at the C-SON entity 52. The network entity 90 sends also training data to the C-SON entity 52 for one or more desired network optimization actions.

**.** Steps 902 to 915 may be repeated for every retraining periodicity.

**.** At step 901, the C-SON entity 91 determines a pre-processing algorithm based at least on the format of the received training data and generates processed training data by applying the pre-processing algorithm to the training data.

**.** At step 902, the C-SON entity 91 sends the processed training data to the processing unit 91 for training the teacher neural network.

**.** At step 903, the C-SON entity 91 sends the processed training data to the processing unit 92 for training the student neural network.

**.** At step 904, the C-SON entity 91 sends reference data to the processing unit 91.

**.** At step 905, the C-SON entity 901 sends the reference data to the processing unit 92.

**.** At step 906, the processing unit 91 and the processing unit 92 train the teacher and student neural networks by applying a knowledge distillation process between the teacher and the student neural network.

**.** At step 907, a teacher prediction loss is computed based on teacher prediction data generated by the teacher neural network and the reference data.

**.** At step 908, the teacher prediction loss is back-propagated in the teacher neural network.

**.** At step 909, feature maps from different intermediate layers and/or the final layer of the teacher neural network are generated.

**.** At step 910, the feature maps are distilled to the student neural network.

**.** At step 911, a first prediction loss is computed for the student neural network based on the student prediction data generated by the student neural network and the reference data.

**.** At step 912, a second prediction loss is computed for the student neural network based on the feature maps of the teacher neural networks and the student prediction data.

**.** At step 913, the first and second prediction losses are added and back-propagated in the student neural network.

**.** At step 914, the processing unit 92 sends the trained student neural network(s) to the C-SON entity 52 as the set of candidate trained machine learning models.

**.** At step 915, the C-SON entity 52 sends to the network entity 90 information related to the set of candidate trained machine learning models that are available at the C-SON entity 52.

**.** At step 916, the network entity 90 selects a trained machine learning model in the set of candidate trained machine learning models based on the information received from the C-SON entity 52.

**.** At step 917, the network entity 90 sends a request to the C-SON entity 52 for receiving configuration data for the selected candidate trained machine learning model.

**.** At step 918, the C-SON entity 52 sends the requested configuration data of the selected trained machine learning model and configuration data of the pre-processing algorithm to the network entity 90.

**.** At step 919, the network entity 90 generates inference data by running the selected trained machine learning model configured with the received configuration data.

**.** FIG. 10 is a flowchart depicting a method for use at the server 11, according to some embodiments.

**.** At step 1001, training data is received (for example directly from one or more data sources or retrieved from a storage unit).

**.** At step 1002, a pre-processing algorithm is determined based at least on the format of the training data.

**.** According to some embodiments, the pre-processing algorithm is determined based on one or more target performance and/or complexity levels of a trained machine learning model requested by an apparatus 13-n.

**.** At step 1003, processed training data is generated by applying the pre-processing algorithm to the training data.

**.** At step 1004, a set of candidate trained machine learning models is generated by performing a knowledge distillation process between a teacher machine learning model and at least two student machine learning models. The candidate trained machine learning models are configured to implement an analytics and/or a decision function for a use-case and have different performance and/or complexity levels.

**.** At step 1005, information related to the set of candidate trained machine learning models is sent to the apparatus 13-n. The information comprises information representative of the performance and/or complexity levels of the set of candidate trained machine learning models.

**.** At step 1006, configuration data for a candidate trained machine learning model selected by the apparatus 13-n is sent to the apparatus 13-n.

**.** FIG. 11 is a flowchart depicting a method for use at the apparatus 13-n, according to some embodiments.

**.** At step 1101, information related to a set of candidate trained machine learning models is received from the server 11. The candidate trained machine learning models are configured to implement an analytics and/or a decision function for a use-case and have different performance and/or complexity levels. The information comprises information on the performance and/or complexity levels of the candidate trained machine learning models.

**.** At step 1102, a candidate trained machine learning model is selected in the set of candidate trained machine learning models based on the performance and/or complexity levels.

**.** At step 1103, a request for receiving configuration data for the selected trained machine learning model is sent to the server 11.

**.** At step 1105, configuration data for the selected trained machine learning model and configuration data for a pre-processing algorithm are received from the server 11.

**.** At step 1106, inference data is generated by running the selected trained machine learning model configured with the configuration data received from the server 11.

**.** In an exemplary application to 5G communication systems, network functions may benefit from the sharing of machine learning models that are trained at the management system. In order to integrate the sharing of the trained machine learning models to the 3GPP standards, the following features may be introduced:
- the 3GPP management system may have the capability to enable an authorized consumer to request and get the available alternative models of differing complexity and performance, and
- the 3GPP management system may have the capability to enable an authorized consumer to request one of the available alternative models of differing complexity and performance.

**.** It should be appreciated by those skilled in the art that any functions, engines, block diagrams, flow diagrams, state transition diagrams and/or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or apparatus, whether such computer or processor is explicitly shown.

**.** Each described computation function, block, step can be implemented in hardware, software, firmware, middleware, microcode, or any suitable combination thereof. If implemented in software, the computation functions, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable apparatus, create the means for implementing the functions described herein.

**.** When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause an apparatus to perform the necessary tasks. Additionally, the processor, memory, and example algorithms, encoded as computer program code, serve as means for providing or causing performance of operations discussed herein.

**.** In the present description, block denoted as "means configured to" perform a certain function or "means for" performing a certain function shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

. As used in this application, the term "circuit" or "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

. This definition of "circuit" or "circuitry" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

. The "circuit" or "circuitry" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

. The "circuit" or "circuitry" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

. As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing, or carrying instruction(s) and/or data.

. The methods and devices described herein may be implemented by various means. For example, these techniques may be implemented in hardware, software, or a combination thereof. For a hardware implementation, the processing elements of the different apparatuses operating in the system 1 can be implemented for example according to a hardware-only configuration (for example in one or more FPGA, ASIC, or VLSI integrated circuits with the corresponding memory) or according to a configuration using both VLSI and Digital Signal Processor (DSP).

. FIG. 12 is a block diagram illustrating an exemplary hardware/software architecture of an apparatus 1200, according to some embodiments. The architecture may include various computing, processing, storage, communication, and displaying units comprising:
- communication circuitry 1202 comprising a transceiver (e.g., wireless, or optical transceiver) configured to connect the apparatus 1200 through corresponding links to ensure transmission/reception of data and/or signals. The communication circuitry may support various network and air interface such as wired, optical fiber, and wireless networks;
- a processing unit 1203 configured to execute the computer-executable instructions to run the methods and algorithms according to the various embodiments and perform the various required functions of the apparatus 1200 and any functionalities required to enable the apparatus 1200 to operate according to the various embodiments. The processing unit 1203 may be a general-purpose processor, a special purpose processor, a DSP, a plurality of microprocessors, a controller, a microcontroller, an ASIC, an FPGA circuit, any type of integrated circuit, and the like;
- a power source 1204 that may be any suitable device providing power to the apparatus 1200 such as dry cell batteries, solar cells, and fuel cells;
- a storage unit 1205 possibly comprising a random-access memory (RAM) or a read-only memory used to store any data required to perform the functionalities of the apparatus 1200 according to the embodiments;
- Input peripherals 1207;
- Output peripherals 1208 comprising communication means such as displays enabling for example man-to-machine interaction between the collaborative learning apparatus 1200 and an administrator for configuration and/or maintenance purposes.

. The architecture of the apparatus 1200 may further comprise one or more software and/or hardware units configured to provide additional features, functionalities and/or network connectivity.

. Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

. For example, the program comprises instructions stored on the computer-readable storage medium that, when executed by a processor, cause the processor to:
- generate a set of candidate trained machine learning models configured to implement an analytics and/or a decision function by performing a knowledge-distillation process between a teacher machine learning model and at least two machine learning models, the candidate trained machine learning models having different performance and/or complexity levels;
- send information related to the set of candidate trained machine learning models to at least one apparatus, the information comprising information representative of the performance and/or complexity levels of the set of candidate trained machine learning models;
- send to an apparatus configuration data for a candidate trained machine learning model selected by the apparatus.

. In another example, the program comprises instructions stored on the computer-readable storage medium that, when executed by a processor, cause the processor to:
- select, in a set of candidate trained machine learning models configured to implement an analytics and/or a decision function and having different performance and/or complexity levels, a candidate trained machine learning model based on the performance and/or complexity levels;
- send, to a server, a request for receiving configuration data of a trained machine learning model selected in the set of candidate trained machine learning models, and
- generate inference data by running the selected trained machine learning model configured with the configuration data received from the server.

. It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various steps illustrated and/or described may be performed in the sequence illustrated and/or described, in other sequences, in parallel, or omitted. Likewise, the order of the above-described processes may be changed.

## Claims

1. A server (11) comprising:
- means (111) for generating a set of candidate trained machine learning models configured to implement an analytics and/or a decision function by performing a knowledge distillation process between a teacher machine learning model and at least two student machine learning models, wherein the candidate trained machine learning models have different performance and/or complexity levels;
- means (1121) for sending information related to the set of candidate trained machine learning models to at least one apparatus (13-n), the information comprising information representative of the performance and/or complexity levels of the set of candidate trained machine learning models;
- means (1122) for sending to an apparatus (13-n) configuration data for a candidate trained machine learning model selected by the apparatus (13-n).

2. The server (11) of claim 1, wherein the means (1122) are configured to send the configuration data in response to a request received from the apparatus (13-n), wherein the request includes at least one target performance and/or complexity level related to a requested trained machine learning model.

3. The server (11) of claim 2, wherein the means (111) are configured to generate the set of candidate trained machine learning models in response to the request.

4. The server (11) of any preceding claim, wherein the means (111) are configured to:
- determine a pre-processing algorithm based at least on a format of training data;
- generate processed training data by applying the pre-processing algorithm to the training data;
- train the teacher and the at least two student machine learning models using the processed training data.

5. The server (11) of claims 2 and 4, wherein the means (111) are configured to determine the pre-processing algorithm based on the at least one target performance and/or complexity level.

6. The server (11) of any preceding claim, wherein the configuration data include software instructions and/or trained model parameters.

7. The server (11) of any preceding claim, wherein the means (111) are configured to:
- train the teacher machine learning model to generate teacher output data from input data in order to minimize a teacher prediction loss;
- train each student machine learning model to generate student output data from the input data in order to minimize a student prediction loss;
wherein the student prediction loss is computed as a weighted sum of a first prediction loss and a second prediction loss, wherein the first prediction loss is a loss of the student machine learning model and the second prediction loss is a distillation loss computed based on the teacher output data and the student output data.

8. An apparatus (13-n) comprising:
- means (131-n) for selecting, in a set of candidate trained machine learning models configured to implement an analytics and/or a decision function and having different performance and/or complexity levels, a candidate trained machine learning model based on the performance and/or complexity levels;
- means (132-n) for sending to a server (11) a request for receiving configuration data of a trained machine learning model selected in the set of candidate trained machine learning models;
- means (130-n) for generating inference data by running the selected trained machine learning model configured with the configuration data received from the server (11).

9. The apparatus (13-n) of claim 8, wherein the means (132-n) are configured to send to the server (11) a request for receiving information related to the set of candidate trained machine learning models, wherein the request includes at least one target performance and/or complexity level related to a requested trained machine learning model.

10. The apparatus (13-n) of claim 9, wherein the means (131-n) are configured to select the trained machine learning model from the set of candidate trained machine learning models based on the at least one target performance and/or complexity level and information received from the server (11), wherein the information comprises information representative of the performance and/or complexity levels of the set of candidate trained machine learning models.

11. The apparatus (13-n) of any preceding claim 8 to 10, wherein the means (130-n) are configured to generate pre-processed input data by applying a pre-processing algorithm to input data, wherein the configuration data of the pre-processing algorithm are received from the server (11), wherein the means (130-n) are configured to generate the inference data by applying the selected trained machine learning model to the pre-processed input data.

12. The apparatus (13-n) of any preceding claim 8 to 11, wherein the means (130-n) are configured to measure a performance of the selected trained machine learning model, wherein the means (132-n) are configured to send, based on the measured performance, a new request for receiving updated configuration data for the selected trained machine learning model or for receiving configuration data of another trained machine learning model selected based on an updated target performance and/or complexity level.

13. The apparatus (13-n) of any preceding claim 8 to 12, wherein the apparatus (13-n) is an apparatus operable at a wireless edge (10) of a wireless communication system (1), wherein the analytics and/or decision function is a network function at the wireless communication system (1).

14. A method for use at a server, wherein the method comprises:
- generating (1004) a set of candidate trained machine learning models configured to implement an analytics and/or a decision function by performing a knowledge distillation process between a teacher machine learning model and at least two student machine learning models, wherein the candidate trained machine learning models have different performance and/or complexity levels;
- sending (1005) information related to the set of candidate trained machine learning models to at least one apparatus, the information comprising information representative of the performance and/or complexity levels of the set of candidate trained machine learning models;
- sending (1006) to an apparatus configuration data for a candidate trained machine learning model selected by the apparatus.

15. A method for use at an apparatus, wherein the method comprises:
- selecting (1102), in a set of candidate trained machine learning models configured to implement an analytics and/or a decision function and having different performance and/or complexity levels, a candidate trained machine learning model based on the performance and/or complexity levels;
- sending (1103) to a server a request for receiving configuration data of a trained machine learning model selected in the set of candidate trained machine learning models;
- generating (1106) inference data by running the selected trained machine learning model configured with the configuration data received from the server.
